(19) Europäisches Patentamt
European Patent Office
Office européen des brevets

(11) **EP 2 212 739 B1**

(12) **EUROPÄISCHE PATENTSCHRIFT**

(45) Veröffentlichungstag und Bekanntmachung des Hinweises auf die Patenterteilung:
**04.06.2014 Patentblatt 2014/23**

(51) Int Cl.:
**G02B 27/60** (2006.01)  **G02B 27/58** (2006.01)

(21) Anmeldenummer: **08802655.4**

(22) Anmeldetag: **26.09.2008**

(86) Internationale Anmeldenummer:
**PCT/EP2008/008204**

(87) Internationale Veröffentlichungsnummer:
**WO 2009/043545 (09.04.2009 Gazette 2009/15)**

(54) **VERFAHREN UND ANORDNUNG ZUR OPTISCHEN ERFASSUNG EINER BELEUCHTETEN PROBE**

METHOD AND ASSEMBLY FOR THE OPTICAL RECORDING OF AN ILLUMINATED SAMPLE

PROCÉDÉ ET DISPOSITIF DE DÉTECTION OPTIQUE D'UN ÉCHANTILLON ÉCLAIRÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 DE 102007047468**

(43) Veröffentlichungstag der Anmeldung:
**04.08.2010 Patentblatt 2010/31**

(60) Teilanmeldung:
**12006411.8 / 2 557 451**

(73) Patentinhaber: **Carl Zeiss Microscopy GmbH**
**07745 Jena (DE)**

(72) Erfinder:
• KEMPE, Michael
07751 Jena (DE)
• SCHWERTNER, Michael
SM7 2NS Banstead (Surrey) (GB)
• WOLLESCHENSKY, Ralf
07743 Jena (DE)

(74) Vertreter: **Hampe, Holger**
**c/o Carl Zeiss AG**
**Standort Jena**
**Carl-Zeiss-Promenade 10**
**07745 Jena (DE)**

(56) Entgegenhaltungen:
EP-A- 0 353 495      EP-A- 1 936 422
WO-A-00/43819        DE-A1- 10 118 463
DE-A1- 10 155 002    US-A1- 2007 206 276

• NEIL M A A ET AL: "METHOD OF OBTAINING OPTICAL SECTIONING BY USING STRUCTURED LIGHT IN A CONVENTIONAL MICROSCOPE" OPTICS LETTERS, OSA, OPTICAL SOCIETY OF AMERICA, WASHINGTON, DC, US, Bd. 22, Nr. 24, 15. Dezember 1997 (1997-12-15), Seiten 1805-1807, XP000733996 ISSN: 0146-9592 in der Anmeldung erwähnt

**Beschreibung**

Strukturierte Beleuchtung wird in der Mikroskopie zur Tiefendiskriminierung im Weitfeld [1] und zur Auflösungs- und Kontraststeigerung [2] eingesetzt. Im Allgemeinen wird dabei ein Gitter oder eine periodische Struktur in die Probe projiziert [3] oder durch Interferenz kohärenter Teilstrahlen ein Interferenzmuster in der Probe erzeugt [4]. Durch Verschiebung der Beleuchtungsstruktur werden voneinander verschiedene Bilder mit unterschiedlicher Phasenlage der periodischen Struktur erzeugt. Diese werden anschließend in geeigneter Weise miteinander verrechnet, um ein optisches Schnittbild bzw. ein Bild mit erhöhtem Kontrast und erhöhter Auflösung zu gewinnen. Nachteilig wirkt sich dabei aus, dass Signal von außerfokalen Bereichen der Probe mit detektiert wird und durch den limitierten Dynamikbereich des Detektors zu einem verringerten Signal-zu-Rausch-Verhältnis führt. Die Stärke des außerfokalen Signals begrenzt, dabei die nutzbare Probendicke. Das ist besonders dann von erheblicher Bedeutung, wenn die Frequenz der Strukturierung sich der beugungsbegrenzten Grenzfrequenz des optischen Systems nähert und der Kontrast der Strukturierung daher prinzipbedingt niedrig ist. Das ist immer dann der Fall, wenn eine Kontrast- und Auflösungssteigerung erzielt werden soll.

Eine Lösung dieses Problems besteht in der teilweise konfokalen Detektion, die durch die Strukturierung einer Beleuchtungslinie und der Detektion des dadurch angeregten Fluoreszenzlichts mit einem Spaltdetektor möglich wird [5]. Dieses Verfahren hat allerdings Nachteile. Die Strukturierung erfolgt nur entlang der Linie. Als Folge davon bleiben die Effekte der Kontrast- und Auflösungssteigerung auf diese Richtung beschränkt. Insbesondere bei nichtlinearer [6], aber auch bei linearer Strukturierung [7] ist damit die Diskrepanz zwischen der einen Richtung mit Auflösungssteigerung und allen anderen Raumrichtungen signifikant. Das Scannen der Linie in einer beliebigen Richtung in der Probenebene und auch die Einstellung der Phasenlage der periodischen Struktur ist notwendig. Entsprechend dem Stand der Technik werden hierzu separate Aktuatoren für die Ansteuerung der Relativen Phasenlage und den Scanvorgang benötigt.

Die vorliegende Erfindung hat das Ziel, die Nachteile des Standes der Technik zu überwinden

Erfindungsgemäß werden die Vorteile der strukturierten Beleuchtung im Weitfeld (wenige optische Komponenten, hohe Parallelisierung) mit denen der strukturierten Beleuchtung entlang einer Linie (teilkonfokale Unterdrückung des Untergrundsignals für maximalen Kontrast, hohe Intensitäten im Fokus für nichtlineare und lineare Probenwechselwirkungen) zu verbinden. Die vorgeschlagene Anordnung gestattet eine schnelle, variable und präzise Rotation der Scanrichtung und eine Einstellung der relativen Phasenlage der abgebildeten strukturierten periodischen Struktur mit Hilfe von nur zwei Scannern. Zusätzlich wird eine variabel einstellbare konfokale Detektion bei gleichzeitig nur sehr geringen Lichtverlusten im Detektionsstrahlengang ermöglicht. Es wird auch auf DE10155002A1 verwiesen.

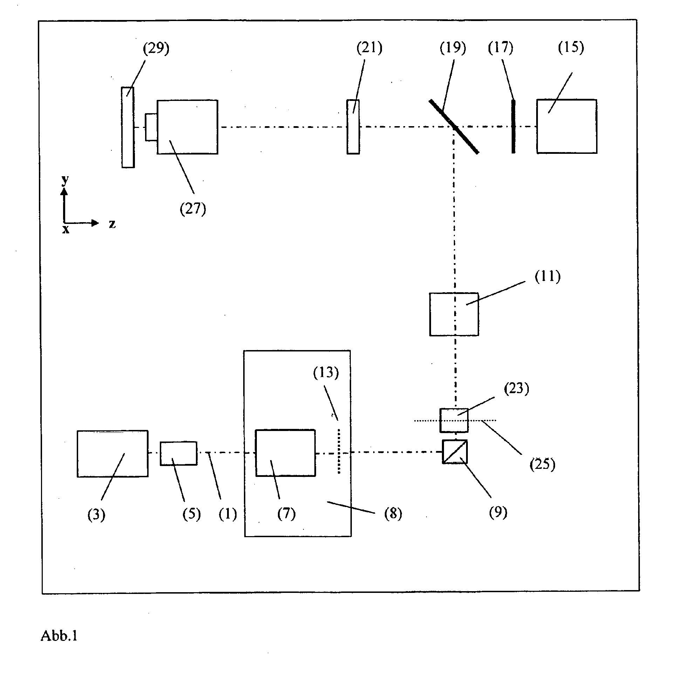

Die erfindungsgemäße Lösung ist vorzugsweise ein linienscannendes Mikroskop (siehe Abb.1) welches im Detektionsstrahlengang im Vergleich zu einem Weitfeldsystem ebenso wenig Komponenten enthält. Konkret sind dies ein für einen unendlichen Strahlengang korrigiertes Objektiv (27), die Tubuslinse (21), der Hauptfarbteiler (19), ein Emissionsfilter (17) und die Kamera (15). Im Anregungsstrahlengang befindet sich die Strahlformungseinheit (8), die den durch den Modulator (5) intensitätsmodulierten Lichtstrahl der Lichtquelle (3) zu einer Linie formt, welche entlang der Linienausdehnung moduliert ist. In dem in Abbildung 1 dargestellten Ausführungsbeispiel ist die Strahlformungseinheit durch eine Kombination aus Linienformungsoptik (7) und einer periodische Struktur (13) zusammengesetzt, wobei (7) und (13) zu einer mechanischen Gruppe (8) zusammengefasst sind, welche um die optische Achse (1) rotiert werden kann. Die Rotation der Strahlformungseinheit (8), welche vorzugsweise durch einen schnellen Schrittmotor realisiert ist, kann die Orientierung der in die Probe abgebildeten Linie in der x/y Ebene eingestellt werden.

In einer weiteren Implementierung entsprechend der vorliegenden Erfindung (nicht in Abb. 1 dargestellt) kann die Strahlformungseinheit (8) auch durch ein einziges diffraktives optisches Element implementiert sein, welches ebenfalls um die optische Achse (1) rotiert werden kann. Ein solches diffraktives Element kann Linienformung in einer Richtung und Linienstrukturierung in einer dazu orthogonalen Richtung in einem Schritt durchführen.

Im weiteren Verlauf der optischen Achse befinden sich ein erster Scanner (9), ein weiterer, zum ersten Scanner (9) orthogonal stehender Scanner (23) und ein Scanobjektiv (11). Die Rotationsachse oder Schwenkachse (25) des Scanners (23) ist zur Rotationsachse des ersten Scanners (9) im Wesentlichen orthogonal angeordnet. Hierbei wird Scanner (9) für eine Verschiebung der Linie in der Probe in x-Richtung und Scanner (23) für eine Verschiebung der Linie in y-Richtung verwendet.

Beide Scanner (9) und (23) befinden sich in der Nähe der konjugierten Pupillenebene.

Abb.1 zeigt den schematischen Aufbau des erfindungsgemäßen Mikroskops

(1) ist die Optische Achse, (3) die Lichtquelle, (5) ein Schaltbarer Attenuator / AOM, (8) eine Strahlformungseinheit mit einer (7) Linienformungsoptik, beispielsweise einer Zylinderlinse, , (9) ein Scanner mit einer Rotationsachse senkrecht zur Zeichenebene, (23) ein Scanner mit einer Rotationsachse (25) im wesentlichen parallel zur Zeichenebene, (11) eine Scanoptik, (13) eine Maske mit periodischer Struktur in der einer zur Probe konjugierten Zwischenbildebene, (15) ein ortsauflösender Flächensensor wie z.B. eine CCD-Empfängermatrix, (17) ein Emissionsfilter, (19) ein Hauptfarbteiler, (21) eine Tubuslinse, (27) ein Mikroskopobjektiv, (29) die Probe. Die Elemente (7) und (13) sind zu einer mechanischen Gruppe, der Strahlformungseinheit (8) zusammengefasst, welche vorzugsweise um die optische Achse (1) rotierbar angeordnet ist.

Im Folgenden soll die Verschiebung der Phase der strukturierten Linie sowie des Abscannen des Bildfeldes durch die Zusammenwirkung der beiden Scanner (9) und (23) mit dem AOM (5) beschrieben werden.

Ohne Einschränkung der Allgemeinheit soll im Folgenden ein Beispiel betrachtet werden, bei dem die Linie in der Probe entlang der x-Richtung ausgerichtet ist und das Abscannen des Bildfeldes in der dazu senkrechten y-Richtung stattfindet. Dies erfordert auch die entsprechende Orientierung der Strahlformungseinheit (8) um eine Orientierung der Linie in x-Richtung zu erzeugen.

Die Funktion des Scanners (23) besteht bei dieser Linienorientierung (9) darin, die Phasenlage der Strukturierung zwischen zwei und mehr aufgenommenen Bildern zu verändern, wobei der Scanner (9) für den Scanvorgang in y-Richtung verantwortlich ist.

Aus den aufgenommenen Bildern bei jeweils unterschiedlicher Phasenlage ("Phasenbildern") erfolgt die Berechnung (Rekonstruktion) eines Schnittbildes. Auf DE10155002A1 wird verwiesen.

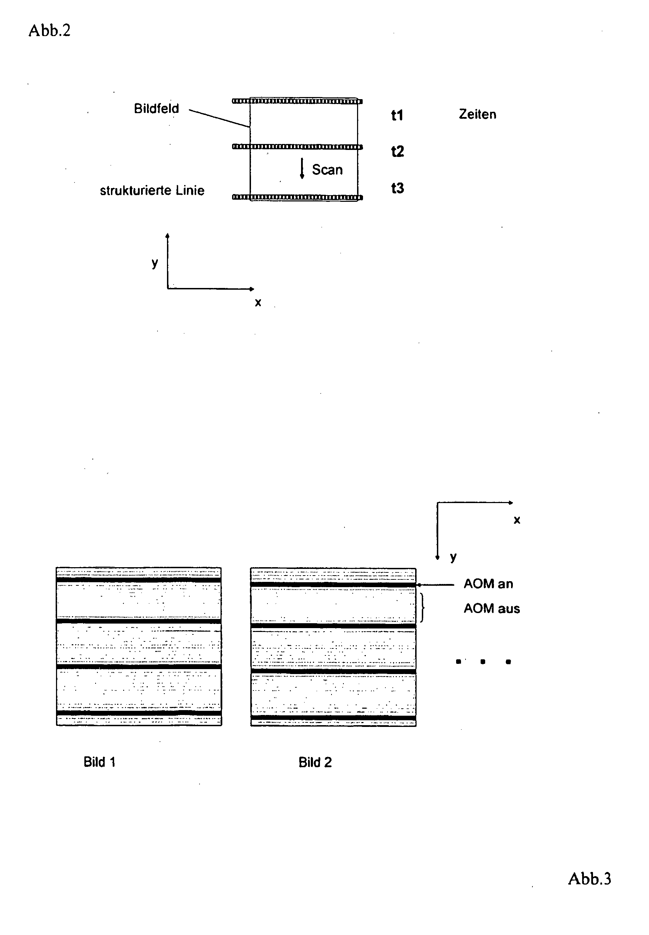

Abb. 2 zeigt die Strukturierung der Beleuchtung

Wenn während eines linearen Scans des Scanners (9) über eine Zeit $\Delta t = t3-t1$ die Kamera synchron ein Bild mit einer Belichtungszeit von mindestens $\Delta t$ einzieht, erhält man ein einem Weitfeldbild des Objektes äquivalentes Resultat. Dabei wird der außerfokale Untergrund ebenfalls mit detektiert. Eine konfokale Filterung wird erfindungsgemäß möglich, wenn durch den Modulator (5) synchron zum Scanvorgang bei der Aufnahme jedes Phasenbildes das zur Berechnung eines Schnittbildes gehört, in y-Richtung die Beleuchtung in gleicher Weise periodisch an- und ausgeschaltet wird.

Hierbei kann der Scanner neben der kontinuierlichen Scanbewegung mit Ein- und Ausschalten vorteilhaft auch in den ausgeschalteten Abschnitten schnell zur nächsten Position mit angeschalteter Beleuchtung bewegt werden, in der der beleuchtete Scanvorgang fortgesetzt wird. Die Bewegung könnte auch wie mit einem Schrittmotor schrittartig erfolgen.

Durch das erfindungsgemäße Verfahren ergibt sich eine in y-Richtung strukturierte Belichtung in der Kameraebene (siehe Abb. 3). Die Abstände zwischen den belichteten Zeilen der Kamera werden in einer vorteilhaften Ausprägung der Erfindung so gewählt, dass ein Übersprechen des außerfokalen Untergrundes bei der Beleuchtung einer Linie auf der Probe in die Region auf der Kamera , die der Beleuchtung der nächsten Linie in der Probe entspricht, minimiert wird. Bei Abtastung des Objektes nach dem Nyquist-Theorem (eine Detektorzeile emtspricht der halben Breite der beugungsbegrenzten Linie) sollten empirisch M = 5 bis 10 Zeilen Abstand zwischen benachbarten Belichtungszeilen ausreichen. Im nächsten von der Kamera erfassten Bild wird dann das belichtete Zeilenmuster um vorzugsweise eine Zeile verschoben, was durch eine entsprechende Verzögerung beim Anschalten des Modulators erzielt wird. Es wird also beispielsweise zunächst die 1., 10., 20. Zeile, dann die 2., 11. und 21. Zeile belichtet.

Dieser Prozess der zeilenweisen Verschiebung der Objektbeleuchtung wird solange wiederholt, bis alle Abschnitte der Probe im Bildfeld abgetastet sind, wobei als Resultat dieses Aufnahmevorganges M Bilder pro Phasenlage vorliegen.

Alternativ könnte für eine Abstandseinstellung zwischen belichteten Zeilen zunächst die Aufnahme bei mehreren Phasenlagen der periodischen Struktur erfolgen und dann der Abstand für die Aufnahme wiederum mehrerer Phasenbilder verändert werden.

Jedes dieser Bilder kann wiederum zusätzlich zur schon beschriebenen Verfahrensweise durch wiederholte Aufnahme, vorzugsweise mit möglichst geringer Intensität zur Probenschonung, mit gleichen Scanner-Einstellungen und anschließender Mittelung entstanden sein. Dieses Verfahren kann Artefakte aufgrund von Bleichvorgängen in der Probe reduzieren. Über die Verrechnung der M Bilder pro Phasenlage kann nun die Konfokalität eingestellt werden.

Insbesondere muss für die einzelnen Bilder der durch den Empfänger erfasste belichtete Untergrund zwischen den belichteten Empfängerzeilen herausgerechnet werden. Dieser ist auf dem Empfänger leicht zu identifizieren, da die belichteten Zeilen im Objekt eindeutig voneinander separierten Bereichen auf der Kamera zuzuordnen sind.

Wenn alle M Bilder einer Phasenlage einfach aufsummiert werden, erhält man ein dem Weitfeldbild entsprechendes Ergebnis. Die Aufsummierung der Bilder nach Selektion der Zeilen, die den entsprechenden beleuchteten Zeilen im Fokus des Objektes entsprechen, ergibt ein konfokales Bild. In diesem Schritt werden die zu den selektierten Zeilen benachbarten Bildbereiche wie beschrieben maskiert und nicht ausgewertet. Dies entspricht der Funktion einer virtuellen Spaltblende, da die nicht genutzten, maskierten Bildbereiche den Detektionsorten des außerfokalen Streulichtes entsprechen. Die Konfokalität kann dabei von 1 Airy Unit (2 Zeilen selektiert) bis M Airy-Units variiert werden (virtuelle Spaltblende).

Abb. 3 zeigt Belichtungsmuster auf der Kamera für konfokale Detektion bei ein- und ausgeschaltetem Modulator (AOM).

Die Geschwindigkeit der Bildaufnahme wird dabei im Vergleich zur nichtkonfokalen Detektion um den Faktor M verringert. Wenn man einen Bildeinzug von 50 Bildern/s zugrunde legt, kann man bei M=5 ein vollständiges Bild (bei einer Phasenlage der Strukturierung) in 100 ms erhalten. Allerdings ist zu berücksichtigen, dass pro Strukturierungsrichtung N= 3 bis 5 Bilder mit verschiedenen Phasenlagen aufgenommen werden müssen. Im linearen Strukturierungsfall mit 3 Strukturierungsrichtungen ergeben sich daher typischerweise 9 Bilder [7], was bei M=5 zu einer Bildaufnahmezeit von ca. 1 s pro Ebene führt.

Eine etwas günstigere Situation ergibt sich, wenn Scanner (9) nicht gleichförmig (mit Geschwindigkeit $v_s$) über das Bildfeld scannt, sondern sich in den Zeiten mit ausgeschaltetem Laser mit Maximalgeschwindigkeit $v_{max}$ bewegt, Das stellt zwar höhere Anforderungen an die Steuerung und Synchronität der Scanner, erhöht die Bildaufnahmezeit aber um den Faktor

$$sf = \frac{M}{(M-1)\frac{v_s}{v_{max}}+1}$$

d.h. ungefähr um das M-fache (wenn $v_{max} \gg v_s$) bzw. bis zur maximalen Bildaufnahmerate der Kamera.

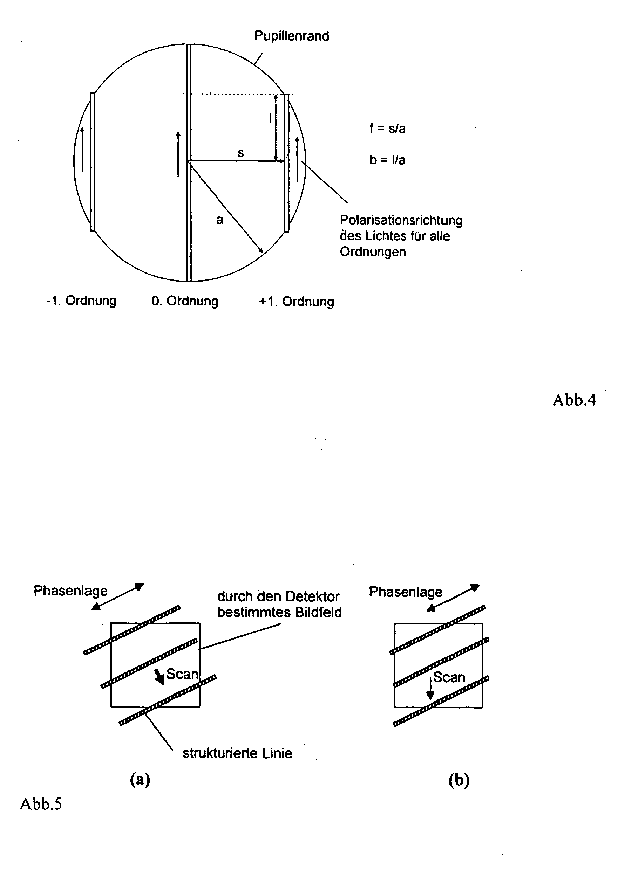

Bei der linienförmigen, strukturierten Beleuchtung ist zu beachten, dass mit zunehmender Strukturierungsfrequenz die Länge der durch die zirkulare Pupille transmittierten höheren Ordnungen kleiner wird (siehe Abb. 4). Dies bedeutet, dass der Kontrast einer Interferenz mit der 0. Ordnung beleuchtungsseitig kleiner wird. Der Kontrast der Interferenz zwischen den höheren Ordnungen ist allerdings bei symmetrischem Durchgang durch die Pupille unverändert 100%. Ferner wird die Breite der beugungsbegrenzten Linie im Bild größer. Bei einer auf die Grenzfrequenz normierten Strukturierungsfrequenz von f ergibt sich eine Verbreiterung b (Linienbreite geteilt durch minimale Breite bei voller NA) von

$$b = \left(2\sqrt{1-f^2}\right)^{-1}.$$

Für eine typische Strukturierungsfrequenz von 90% der Grenzfrequenz (f=0.9) ergibt sich eine Verbreiterung von 15%. Bei 95% der Grenzfrequenz steigt diese bereits auf 60% an. Dieser Verbreiterung hat keinen Einfluß auf die Auflösung, die durch die Strukturierungsfrequenz und die Übertragungsfunktion des Objektivs bestimmt wird, wohl aber auf die Unterdrückung außerfokalen Untergrunds und muss für die konfokale Filterung berücksichtigt werden.

Abb. 4 zeigt Ordnungen der strukturierten Linienbeleuchtung in der Pupille (Fouriertransformation einer strukturierten Linienverteilung).

Durch die interferierenden ersten Beugungsordnungen wird auf der Probe eine strukturierte Linie erzeugt. Der Abstand der Beugungsordnungen ist s, a ist die Pupillengröße. Das Verhältnis von s und b ist die auf die Grenzfrequenz normierte Strukturierungsfrequenz f.

Die in Abb. 3 dargestellten Linien parallel zur x-Richtung repräsentieren nur eine Strukturierungsrichtung. Die Orientierung der Linien auf der Kamera kann durch Rotation der Einheit (8) (Abb. 1) eingestellt werden. Die Verschiebungsrichtung und Phasenlage der periodischen Struktur wir mittels der Scanner (9) und (23) eingestellt.

Der allgemeine Fall mit einer beliebigen Linienorientierung wird in Abbildung 5 veranschaulicht.

Abb. 5 dient zur Erläuterung der Einstellung von Scanrichtung und Phasenlage durch die Scanner bei synchroner Scannerbewegung (a) und bei Scannen mit einem Scanner (b).

Die Phasenlage (Doppelpfeil) der projizierten Struktur wird dabei durch den relativen, konstanten Offset der beiden Scanner (9) und (23) während des Scanvorgangs bestimmt, während die vorzugsweise dazu senkrechte Scan-Richtung (Pfeil) durch die relative Geschwindigkeit der beiden Scanner festgelegt ist. Es ist aber auch möglich, das Abscannen der Probe nur mit Scanner (9) durchzuführen. Dies vereinfacht die Systemsteuerung. Abhängig vom Scanmodus ist sicherzustellen, dass das im Allgemeinen vom Detektor bestimmte Bildfeld auch bei rotierter Linie möglichst homogen ausgeleuchtet wird.

In der bisher beschriebenen Anordnung wird die Formung der in die Probe projizierten Struktur durch die Strahlformungseinheit (8) gewährleistet. Erfindungsgemäß kann die Einheit (8) aus der Kombination einer Linienformungsoptik (7) mit einer periodischen Struktur (13) bestehen. Dabei kann die Linienformungsoptik eine Powell-Linse enthalten. Die periodische Struktur kann eine Phasenstruktur, eine Amplitudenstruktur oder eine Kombination aus beidem darstellen. Weiterhin kann die gesamte Strahlformungseinheit (8) durch ein diffraktivoptisches Element ersetzt werden (siehe auch DE10155002A1). Dieses Element kann auf der Probe eine oder mehrere strukturierte Linien im Mindestabstand M erzeugen um die Zahl der Verschiebungen zu reduzieren.

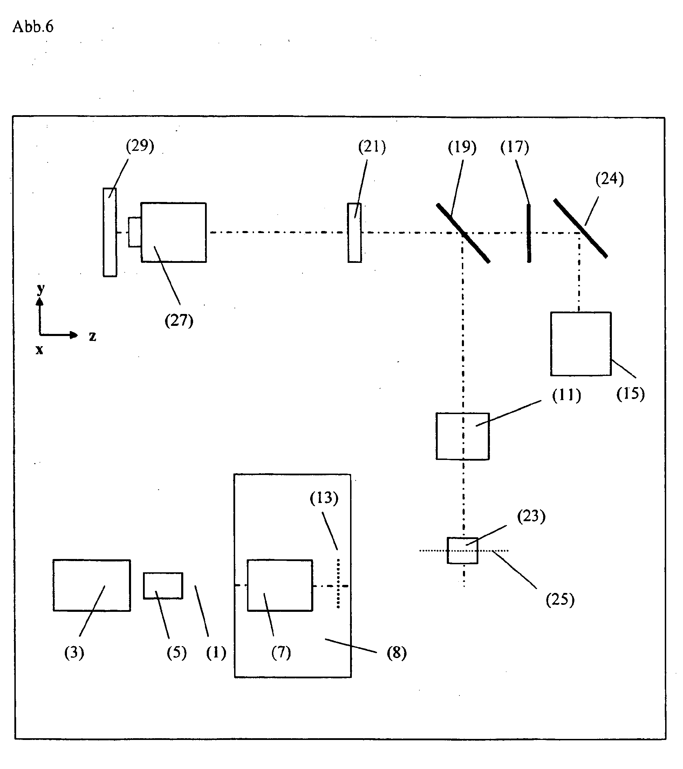

Ein potentielles Problem der sequentiellen Abtastung der Probe mit M Zeilenmustern entsteht durch Probenbewegung während der Bildaufnahmezeit. Dies ist ein grundsätzliches Problem der Verfahren zur strukturierten Beleuchtung und sollte durch minimale Bildaufnahmezeiten so klein wie möglich gehalten werden. Daher kommt der empfindlichen Detektion mit minimalen Fluoreszenzverlusten zwischen Objekt und Detektor hohe Bedeutung zu. Eine Alternative zur sequentiellen Abtastung mit M Zeilenmustern, die es ermöglicht, anstelle der M Zeilenbilder ein einziges Bild einzuziehen und dennoch konfokale Detektion zu ermöglichen, soll im folgenden beschrieben werden. Dabei macht man sich die Tatsache zunutze, dass beim Linienscanner das Objekt sequentiell zeilenweise abgetastet wird: Das ermöglicht, im Detektionsstrahlengang durch ein weiteres Element eine diskrete, zeilenweise Ablenkung des Detektionslichts zu realisieren, so dass auf dem Detektor ein Zeilenmuster wie in Abb. 3 entsteht, obwohl das Objekt ohne Zwischenräume abgescannt wird. Um ein gesamtes Bild derart auf dem Detektor abzubilden ist die Voraussetzung, dass dieser M mehr Zeilen hat als für das Bild erforderlich. Ein typischer Wert sind 500 Zeilen pro Bild. Mit M = 5 ergibt sich eine erforderliche Detektorzeilenzahl von 2500. Als Element zur Zeilenablenkung könnte z.B. eine Galvoscanner vor dem Detektor zur Anwendung kommen (siehe Abb. 6, Scanner (24)). Wenn die Pixelgröße auf der Kamera 5 $\mu$m beträgt, so ergibt sich der maximale Ablenkungswinkel so, dass in dem oben aufgeführten Beispiel auf der Kamera ein Versatz von (2500-500)$\times$5$\mu$m = 10 mm entsteht. Dies entspricht bei einem Abstand der Kamera zum Scanner von 50 mm einem Scanwinkel von 5 Grad (für eine Ablenkung von 10 Grad). Um die im Objekt abgetastete Zeile nicht über die Zwischenräume zwischen den Zeilen zu verschmieren ist ein Ausschalten der Belichtung (z.B. durch den AOM bzw. AOTF) während der diskreten Ablenkung von Scanner (24) zweckmäßig. Es ist aber auch denkbar, eine kontinuierliche Belichtung zu realisieren. Da die Scangeschwindigkeit von Scanner (24) sehr hoch im Vergleich zu der des Scanners (9) sein muß, kann man die Belichtung während der Bewegung des Scanners (24) vernachlässigen. Beispielsweise erzeugt der Scanner (24) mit derselben Ablenkachse wie der Scanner (9), der wie oben beschrieben für die Ablenkung in Y Richtung verantwortlich ist, beispielsweise 10 versetzte diskrete Scansprünge innerhalb einer Zeilenposition der sequentiellen Zeilenabtastung des Scanners (9), bevor dieser in die nächste detektierte Zeilenposition vorrückt. Der Scanner (9) kann dabei auch kontinuierlich scannen, während Scanner (24) immer diskret, mit einer hohen Ablenkgeschwindigkeit betrieben werden muß. Die Zeit $t_i$ zwischen den Scansprüngen mit einer Zeit $t_d$ entspricht dabei der effektiven Zeilenintegrationszeit auf der Kamera. Es muß mindestes $M \cdot t_d < t_i$ gelten.

Diese Scansprünge erzeugen auf dem Flächendetektor voneinander beabstandete Signale der beleuchteten Probe, die sinngemäß den voneinander beabstandeten Bereichen des Detektors entsprechen wie sie anhand insbesondere Abb.3 weiter oben ausführlich erläutert wurden.

Abb.6 zeigt den schematischen Aufbau des Mikroskops mit alternativer Detektion und einem zusätzlichen Galvo-Scanner (24) mit einer Rotationsachse senkrecht zur Zeichenebene

Um eine strukturierte Beleuchtung mit möglichst hohem Kontrast der Strukturierung in der Objektebene zu erhalten ist bei der Verwendung von Optiken mit höheren numerischen Aperturen, wie sie in der Mikroskopie üblich sind, die Polarisation zu beachten. Ein maximaler Kontrast ist nur dann möglich, wenn die Polarisation des Beleuchtungslichtes senkrecht zur Verbindungslinie der Beugungsordnungen in der Pupillenebene (d.h. senkrecht zur Lage der Linie in einer Bildebene) steht, wie in Abb. 4 dargestellt. Die entsprechende Polarisation des Beleuchtungslichtes muss daher synchron mit der Rotation der Strahlformungseinheit (8) zur Rotation der Blende mitgedreht werden. Ersteres kann bevorzugt durch die Rotation einer $\lambda$/2-Platte im Strahlengang des linear polarisierten Anregungslichts erzeugt werden, wobei der Rotationswinkel der Wellenplatte halb so groß wie die der Strahlformungseinheit ist. Entsprechend ist eine rotierbare Wellenplatte im

Strahlengang von Abb. 1 und 6 zwischen Quelle (3) und Hauptfarbteiler (19) vorzusehen. Alternativ kann die Strahlformungseinheit auch mit einem Polarisator versehen werden, der nur korrekt orientiertes, linear polarisiertes Licht transmittiert. Dies hat einen rotationsabhängigen Lichtverlust zur Folge, siehe Abb. 7, der durch eine (9) geeignet synchronisierte Lichtmodulation kompensiert werden kann.

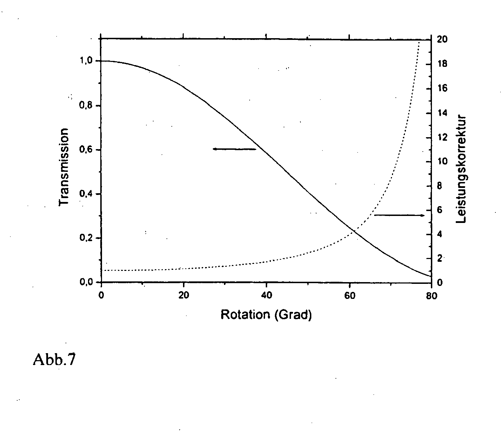

Abb. 7 zeigt den Lichtverlust durch Rotation eines Polarisators zusammen mit der Strahlformungseinheit (8) und Kompensation des Verlusts durch Leistungsanpassung

Die Erfindung ist nicht nur an die beschriebenen Ausführungen gebunden.

Im fachmännischen Rahmen können Modifikationen und Veränderungen von den erfinderischen Gedanken erfasst sein,

Beispielsweise ist die Erfindung sinngemäß auf andere Beleuchtungsverteilungen wie Multipunktanordnungen (US 6028306) und anderen Punktanordnungen, auch Nipkowscheiben und bei Detektion im Weitfeld anwendbar.

Literatur:

[1] Neil M.A.A., Juskaitis R., Wilson T.: "Method of obtaining optical sectioning by using structured light in a conventional microscope", Opt.Lett. 22 (24): 1905-1907, 1997

[2] Lukosz W., Marchand M., "Optische Auflösung unter Überschreitung der beugungsbedingten Auflösungsgrenze", Optica Acta 16, 241-255, 1963

[3] Heintzmann R., Cremer C.,"Laterally modulated excitation microscopy: improvement of resolution by using a diffraction grating", in Proc. of SPIE 3568: 185-196, 1998

[4] Neil M.A.A., Juskaitis, A., Wilson, T., "Real time 3D fluorescence microscopy by two beam interference illumination", Opt. Comm. 153: 1-4, 1998

[5] US Patent 6,947,127 B2, 2005

[6] Heintzmann R., Jovin T.M., Cremer C., "Saturated patterned excitation microscopy - a concept for optical resolution improvement" JOSA A, 19 (8): 1599-1609, 2002

[7] Gustafsson, M.G.L., Agard, D.A., Sedat, J.W., "Doubling the lateral resolution of widefield fluorescence microscopy by structured illumination", in Proc. of SPIE 3919: 141-150,2000

[8] Gustafsson M.G.L. , "Nonlinear structured-illumination microscopy: wide-field fluorescence imaging with theoretically unlimited resolution", PNAS 102:

13081-13086,2005

**Patentansprüche**

1. Verfahren zur tiefenaufgelösten optischen Erfassung einer Probe (29), bei dem eine Probe oder ein Teil davon mittels linienförmiger Beleuchtung abgetastet wird und

     - die Beleuchtung der Probe im Fokus entlang der Linienausdehnung periodisch strukturiert wird.
     - von der Probe (29) kommendes Licht detektiert und Bilder der Probe erzeugt werden,
     - durch Verschiebung der Beleuchtungsstruktur voneinander verschiedene Bilder mit unterschiedlicher Phasenlage der periodischen Struktur erzeugt werden
     - wobei jedes erzeugte Phasenbild der Phasenlage einem Zeilenmuster aus der periodisch strukturierten Beleuchtung auf einem Flächendetektor oder einer Kamera entspricht und aus den derart erzeugten Bildern ein Bild mit erhöhter Auflösung berechnet wird,

     **dadurch gekennzeichnet, dass**
     M Phasenbilder pro Phasenlage erzeugt werden, wobei M $\geq$ 5 ist und
     zwischen benachbarten Belichtungszeilen auf jedem erzeugten Phasenbild auf dem Flächendetektor oder der Kamera (15) zur zeilenweisen nicht descannten Detektion zwischen den Zeilen welche mit Detektionslicht aus dem beleuchteten Probenbereich belichtet sind, Zwischenräume aus M $\geq$ 5 nicht beleuchteten Zeilen erzeugt werden oder auf dem Flächendetektor oder der Kamera (15) ein Abstand von grösser 2,5 beugungsbegrenzten Linien zwischen zwei Belichtungszeilen erzeugt wird, wobei die zu den selektierten Zeilen benachbarten Bildbereiche maskiert und nicht ausgewertet werden und ein Abscannen durch mehrere wiederholte Scanschritte unter Verschiebung des belichteten Zeilenmusters erfolgt bis alle Abschnitte der Probe im Bildfeld abgetastet sind.

2. Verfahren nach Anspruch 1,
wobei bei der linienweisen Beleuchtung und Detektion die Beleuchtung mehrfach an-und ausgeschaltet wird.

3. Verfahren nach einem der vorangehenden Ansprüche,
wobei eine wiederholte Lichtunterbrechung bei der Probenabtastung derart erfolgt, dass zwischen zwei beleuchteten Probenteilen ein Zwischenraum besteht.

4. Verfahren nach einem der vorangehenden Ansprüche,
wobei eine Berechnung eines Bildes durch teilweise oder vollständige Maskierung der Zwischenräume zwischen den belichteten Probenbereichen zugeordneten Kamerabereichen und Verrechnung der so gewonnenen Bilder erfolgt.

5. Verfahren nach Anspruch 4,
wobei die Verrechnung derart erfolgt, dass benachbart abgetastete Probenbereiche im verrechneten Bild richtig skaliert benachbart zugeordnet sind.

6. Verfahren nach einem der vorangehenden Ansprüche,
wobei während eines Scanvorgangs vor dem Detektor eine weitere Lichtablenkung in Richtung der Abtastung der Probe durch die Linie erfolgt.

7. Verfahren nach einem der vorangehenden Ansprüche,
wobei die Geschwindigkeit der Lichtablenkung grösser als die Geschwindigkeit der Relativbewegung zwischen Probe und Beleuchtungslicht ist.

8. Verfahren nach einem der vorangehenden Ansprüche,
wobei die Lichtablenkung schrittweise oder kontinuierlich erfolgt.

9. Verfahren nach einem der vorangehenden Ansprüche,
wobei bei einer Drehung der Beleuchtungslinie die Polarisation des Beleuchtungslichtes synchron mit der Rotation gedreht wird.

10. Verfahren nach einem der vorangehenden Ansprüche,
wobei eine mehrfache Abtastung erfolgt und die Lager der periodischen Strukturierung auf der Probe und/oder die Lage des Beleuchtungslichtes auf der Probe verschoben wird und mehrere Bilder mit verschiedenen Bildphasen aufgezeichnet und daraus Schnittbilder berechnet werden.

11. Verfahren nach einem der vorangehenden Ansprüche,
wobei die Aufnahme der Bilder mit verschiedenen Bildphasen mit konstantem Zwischenraum zwischen beleuchteten/detektierten Abschnitten erfolgt oder die Lage des Zwischenraums verändert wird und jeweils für eine Lage mehrere Bilder mit verschiedenen Bildphasen aufgezeichnet und daraus Schnittbilder berechnet werden.

12. Verfahren nach einem der vorangehenden Ansprüche,
wobei zunächst die Lage des Zwischenraums bei einer Lage der Strukturierung verändert wird und Probenbilder aufgenommen werden und dieser Vorgang dann für eine weitere Lage der Strukturierung wiederholt wird und die Lage des Zwischenraums derart verändert wird das nacheinander im Wesentlichen alle Probenbereiche linienförmig beleuchtet und das Probenlicht detektiert wird.

13. Verfahren nach einem der vorangehenden Ansprüche,
wobei eine Lichtunterbrechung durch Verringerung der Intensität durch einen elektrooptischen und/oder akustooptischen Modulator (5) erfolgt.

14. Verfahren nach einem der vorangehenden Ansprüche,
wobei zur periodischen Strukturierung der Beleuchtung ein Lichtstrahl in mehrere Teillichtstrahlen zerlegt wird, diese interferometrisch überlagert und zu einer Linie geformt werden.

15. Verfahren nach einem der vorangehenden Ansprüche,
wobei das aus einer nichtlinearen Wechselwirkung der Beleuchtung mit der Probe oder eines Teils der Probe resultierende Licht und detektiert wird.

16. Verfahren nach einem der vorgenannten Ansprüche, **dadurch gekennzeichnet, dass** die optische Schnittdicke oder optische Auflösung variiert wird, indem Strukturen mit verschiedenen Modulationsfrequenzen abgebildet werden und insbesondere bei Beleuchtung mit mehreren Wellenlängen die Schnittdicke durch eine Anpassung der jeweiligen Modulationsfrequenz gleich eingestellt wird.

17. Anordnung zur tiefenaufgelösten optischen Erfassung einer Probe (29), umfassend

- Mittel (7) zur linienförmigen Beleuchtung der Probe mit mindestens einer Wellenlänge,
- Mittel (13) zur periodischen Strukturierung des Beleuchtungslichtes entlang der Linienausdehnung
- Mittel zur Abbildung des von der Probe beeinflussten Lichtes auf mindestens einen Flächendetektor oder eine Kamera (15) zur zeilenweisen nichtdescannten Detektion des Probenlichtes
- und Mittel (9, 23) zur Erzeugung einer Relativbewegung zwischen Probe und Beleuchtungslicht zur Erzeugung voneinander verschiedener Bilder mit unterschiedlicher Phasenlage der periodischen Struktur durch Verschiebung der Beleuchtungsstruktur
- wobei jedes erzeugte Phasenbild der Phasenlage einem Zeilenmuster aus der periodisch strukturierten Beleuchtung auf dem Flächendetektor oder der Kamera entspricht
- Mittel zur Berechnung mindestens eines Bildes mit erhöhter Auflösung aus den erzeugten Phasenbildern
- insbesondere zur Durchführung des Verfahrens nach einem der vorangehenden Ansprüche,
- **dadurch gekennzeichnet, dass**
Mittel zur Erzeugung von M Phasenbildern pro Phasenlage, wobei M ≥ 5 ist und zur Erzeugung einer Lichtunterbrechung während des Abtastvorgangs zur Erzeugung von Zwischenräumen aus M ≥ 5 nicht beleuchteten Zeilen zwischen den Zeilen welche mit Detektionslicht aus dem beleuchteten Probenbereich belichtet sind, vorgesehen sind,
oder auf dem Flächendetektor oder der Kamera (15) ein Abstand von grösser 2,5 beugungsbegrenzten Linien zwischen zwei Belichtungszeilen besteht,
wobei die zu den selektierten Zeilen benachbarten Bildbereiche maskiert und nicht ausgewertet sind
und die Mittel (9, 23) zur Erzeugung der Relativbewegung zwischen Probe und Beleuchtungslicht derart ausgebildet sind, dass durch ein Abscannen durch mehrere wiederholte Scanschritte mit einer Verschiebung des belichteten Zeilenmusters alle Abschnitte der Probe (29) im Bildfeld abgetastet sind.

18. Anordnung nach Anspruch 17,
wobei Intensitätssteuerungsmittel im Beleuchtungsstrahlengang vorgesehen sind und insbesondere ein elektro- oder akustooptischer Modulator (5) zur Lichtunterbrechung vorgesehen ist.

19. Anordnung zur tiefenaufgelösten optischen Erfassung einer Probe,
nach einem der Ansprüche 17 oder 18,
wobei ein Scanner (23) im Detektionsstrahlengang vorgesehen ist um während des linienweisen Abtastvorgangs das Probenlicht auf dem Detektor linienweise diskret oder kontinuierlich auf dem Detektor aufzuspreizen.

20. Anordnung nach Anspruch 17, 18 oder 19,
wobei als Mittel zur Erzeugung der Relativbewegung mindestens ein Scanner (9) vorgesehen ist.

21. Anordnung nach Anspruch 19 oder 20.
wobei zur Einstellung verschiedener Bildphasen der Strukturierung die Lage mindestens eines Scanners verstellbar ist.

22. Anordnung nach einem der Ansprüche 19-21,
wobei als Mittel zur Strukturierung der Beleuchtung ein vorzugsweise um die optische Achse (1) drehbares, bezüglich seiner Transparenz strukturiertes optisches Element vorgesehen ist.

**23.** Anordnung nach einem der Ansprüche 19-22, wobei zur Einstellung verschiedener Frequenzstrukturen in den Strahlengang einschwenkbare Gitter verschiedener Periodizität vorgesehen sind.

**Claims**

**1.** Method for the depth-resolved optical detection of a sample (29), in which a sample or a part thereof is scanned by means of linear illumination, and

- the illumination of the sample is periodically structured in focus along the linear extent,
- light coming from the sample (29) is detected and images of the sample are generated,
- mutually differing images of different phase angles of the periodic structure are generated by displacing the illumination structure,
- each generated phase image of the phase angle corresponding to a line pattern from the periodically structured illumination on a surface detector or a camera, and an image of increased resolution is calculated from the images thus generated,

**characterized in that**
M phase images per phase angle are generated, M being $\geq 5$, and interspaces being generated from M $\geq 5$ non-illuminated lines between adjacent exposure lines on each generated phase image on the surface detector or the camera (15) for the linewise non-descanned detection between the lines, which are exposed with detection light from the illuminated sample region, or a distance of greater than 2.5 diffraction-limited lines is generated on the surface detector or the camera (15) between two exposure lines, the image regions adjacent to the selected lines being masked and not evaluated, and descanning being performed by a plurality of repeated scanning steps with displacement of the exposed line pattern until all sections of the sample in the image field are scanned.

**2.** Method according to Claim 1, in which the illumination is repeatedly switched on and off during the linewise illumination and detection.

**3.** Method according to one of the preceding claims, in which a repeated interruption of the light is performed during the sample scanning in such a way that an interspace results between two illuminated sample parts.

**4.** Method according to one of the preceding claims, in which an image is calculated by partially or completely masking the interspaces between camera regions assigned to the exposed sample regions, and the images thus obtained are computed.

**5.** Method according to Claim 4, in which the computation is performed in such a way that adjacently scanned sample regions are adjacently assigned correctly scaled in the computed image.

**6.** Method according to one of the preceding claims, in which during a scanning process a further diffraction of light takes place upstream of the detector in the direction of the scanning of the sample by the line.

**7.** Method according to one of the preceding claims, in which the speed of the diffraction of the light is greater than the speed of the relative movement between sample and illumination light.

**8.** Method according to one of the preceding claims, in which the light is diffracted stepwise or continuously.

**9.** Method according to one of the preceding claims, in which during a rotation of the illumination line the polarization of the illumination light is rotated synchronously with the rotation.

**10.** Method according to one of the preceding claims, in which there is multiple scanning, and the position of the periodic structure on the sample and/or the position of the illumination light on the sample are/is displaced, and a plurality of images of different image phases are recorded and section images are calculated therefrom.

**11.** Method according to one of the preceding claims, in which the images with different image phases are recorded with a constant interspace between illuminated/detected sections, or the position of the interspace is varied and a plurality of images with different image phases are respectively recorded for a position, and sectional images are calculated therefrom.

**12.** Method according to one of the preceding claims, in which firstly the position of the interspace is varied for a position of the structure and sample images are recorded, and this process is then repeated for a further position of the structure, and the position of the interspace is varied in such a way that in essence all the sample regions are illuminated sequentially in linewise fashion and the sample light is detected.

**13.** Method according to one of the preceding claims, in which light is interrupted by reducing the intensity with the aid of an electro-optical and/or acousto-optical modulator (5).

**14.** Method according to one of the preceding claims, in which to periodically structure the illumination a light beam is split into a plurality of partial beams which are superimposed interferometrically and shaped into a line.

**15.** Method according to one of the preceding claims, in which the light resulting from a non-linear interaction of the illumination with the sample or a part of the sample is detected.

**16.** Method according to one of the preceding claims, **characterized in that** the optical section thickness or optical resolution is varied by imaging structures with various modulation frequencies and, particularly during illumination with a plurality of wavelengths, by setting the section thickness to be equal by adjusting the respective modulation frequency.

**17.** Arrangement for the depth-resolved optical detection of a sample (29), comprising

- means (17) for linear illumination of the sample with at least one wavelength,
- means (13) for periodically structuring the illumination light along the linear extent,
- means for imaging the light influenced by the sample onto at least one surface detector or a camera (15) for linewise non-descanning detection of the sample light,
- and means (9, 23) for generating a relative movement between sample and illumination light in order to generate mutually differing images of different phase angle of the periodic structure by displacing the illumination structure,
- each generated phase image of the phase angle corresponding to a line pattern from the periodically structured illumination on the surface detector or the camera,
- means for calculating at least one image of increased resolution from the generated phase imaging,
- in particular for carrying out the method according to one of the preceding claims,
- **characterized in that**
means are provided for generating M phase images per phase angle, M being $\geq$ 5, and for generating an interruption of the light during the scanning process for generating interspaces from M $\geq$ 5 non-illuminated lines between the lines which are exposed to detection light from the illuminated sample region, or a distance of greater than 2.5 diffraction-limited lines exist between two exposure lines on the surface detector or the camera (15), the image regions adjacent to the selected lines being masked and not evaluated, and the means (9, 23) for generating the relative movement between sample and illumination light are designed in such a way that all the sections of the sample (29) in the image field are scanned by scanning using a plurality of repeated scanning steps with a displacement of the exposed line pattern.

**18.** Arrangement according to Claim 17, in which intensity control means are provided in the illumination beam path and, in particular, an electro-optical or acousto-optical modulator (5) is provided for interrupting the light.

**19.** Arrangement for the depth-resolved optical detection of a sample according to either of Claims 17 and 18, in which a scanner (23) is provided in the detection beam path in order to spread the sample light on the detector discretely or continuously on the detector in linewise fashion during the linewise scanning process.

**20.** Arrangement according to Claim 17, 18 or 19, in which at least one scanner (9) is provided as means for generating the relative movement.

**21.** Arrangement according to Claim 19 or 20, in which the position of at least one scanner can be adjusted in order to set different image phases of the structure.

**22.** Arrangement according to one of Claims 19-21, in which an optical element of structured transparency which can preferably be rotated about the optical axis (1) is provided as means for structuring the illumination.

**23.** Arrangement according to one of Claims 19-22, in which gratings of varying periodicity which can be swivelled into the beam path are provided for setting various frequency structures.

**Revendications**

**1.** Procédé pour la détection optique résolue en profondeur d'un échantillon (29), dans lequel un échantillon ou une partie de celui-ci est exploré au moyen d'un éclairage de forme linéaire, et

- l'éclairage de l'échantillon focalisé est structuré périodiquement le long de l'extension linéaire,
- la lumière provenant de l'échantillon (29) est détectée et des images de l'échantillon sont générées,
- des images différentes les unes des autres ayant des phases différentes de la structure périodique sont générées en décalant la structure d'éclairage,
- dans lequel chaque image de phase générée de la position de phase correspond à un motif de lignes résultant de l'éclairage périodique structuré sur un détecteur bidimensionnel ou un appareil photo et une image de résolution plus élevée est calculée à partir des images ainsi générées,

**caractérisé en ce que**
M images de phase sont générées pour chaque position de phase, avec M ≥ 5 et
des espaces intermédiaires constitués de M ≥ 5 lignes non éclairées sont générés entre des lignes d'éclairage voisines sur chaque image de phase générée sur le détecteur bidimensionnel ou l'appareil photo (15), pour une détection non déscannée ligne par ligne entre les lignes qui sont éclairées par de la lumière de détection provenant de la zone d'échantillon éclairée, ou un intervalle supérieur à 2,5 lignes limitées par la diffraction est généré entre deux lignes d'éclairage sur le détecteur bidimensionnel ou l'appareil photo (15),
dans lequel les zones d'image adjacentes aux lignes sélectionnées sont masquées et ne sont pas exploitées, et un balayage est effectué par une pluralité de pas de balayage répétés en décalant le motif de lignes éclairé jusqu'à ce que toutes les coupes transversales de l'échantillon aient été explorées dans le champ d'image.

2. Procédé selon la revendication 1, dans lequel lors de l'éclairage et de la détection ligne par ligne, l'éclairage est activé et désactivé plusieurs fois.

3. Procédé selon l'une quelconque des revendications précédentes, dans lequel une occultation répétée de la lumière est effectuée lors de l'exploration de l'échantillon de telle manière qu'un espace intermédiaire soit présent entre deux parties d'échantillon éclairées.

4. Procédé selon l'une quelconque des revendications précédentes, dans lequel on effectue un calcul d'une image par masquage partiel ou total des espaces intermédiaires entre les zones d'appareil photo associées aux zones d'échantillon éclairées et une compensation des images ainsi acquises.

5. Procédé selon la revendication 4, dans lequel la compensation est effectuée de telle manière que des zones d'échantillon explorées de manière adjacente sont associées de manière adjacente et avec une échelle correcte dans l'image compensée.

6. Procédé selon l'une quelconque des revendications précédentes, dans lequel une déviation supplémentaire de la lumière est effectuée pendant un processus de balayage devant le détecteur dans la direction de l'exploration de l'échantillon à travers la ligne.

7. Procédé selon l'une quelconque des revendications précédentes, dans lequel la vitesse de la déviation de la lumière est supérieure à la vitesse de déplacement relatif entre l'échantillon et la lumière d'éclairage.

8. Procédé selon l'une quelconque des revendications précédentes, dans lequel la déviation de la lumière est effectuée par pas successifs ou en continu.

9. Procédé selon l'une quelconque des revendications précédentes, dans lequel, lors de la rotation de la ligne d'éclairage, la polarisation de la lumière d'éclairage est amenée à tourner en synchronisme avec la rotation.

10. Procédé selon l'une quelconque des revendications précédentes, dans lequel une exploration multiple est effectuée et la position de la structuration périodique sur l'échantillon et/ou la position de la lumière d'éclairage sur l'échantillon sont/est décalée(s) et une pluralité d'images ayant des phases d'image différentes sont enregistrées et des images de coupe transversale sont calculées à partir des celles-ci.

11. Procédé selon l'une quelconque des revendications précédentes, dans lequel l'acquisition des images ayant des phases d'image différentes est effectuée avec un espace intermédiaire constant entre les coupes transversales éclairées/détectées ou la position de l'espace intermédiaire est modifiée et, pour une position respective, une pluralité d'images ayant des phase d'image différentes sont enregistrées et des images de coupes transversales sont calculées à partir de celles-ci.

12. Procédé selon l'une quelconque des revendications précédentes, dans lequel, en premier lieu, la position de l'espace intermédiaire est modifiée à une position de la structuration et des images d'échantillon sont acquises, et ce processus est ensuite répété pour une autre position de la structuration et la position de l'espace intermédiaire est modifiée de manière à ce que sensiblement toutes les zones d'échantillon soient successivement éclairées linéairement et que la lumière d'échantillon soit détectée.

13. Procédé selon l'une quelconque des revendications précédentes, dans lequel une occultation de la lumière est effectuée par réduction de l'intensité au moyen d'un modulateur électro-optique et/ou acousto-optique (15).

14. Procédé selon l'une quelconque des revendications précédentes, dans lequel, pour la structuration périodique de l'éclairage, un faisceau lumineux est décomposé en une pluralité de faisceaux partiels, ceux-ci étant superposés de manière interférométrique et étant mis sous la forme d'une ligne.

15. Procédé selon l'une quelconque des revendications précédentes, dans lequel la lumière résultant d'une interaction non linéaire de l'éclairage avec l'échantillon ou une partie de l'échantillon est détectée.

16. Procédé selon l'une quelconque des revendications précédentes, **caractérisé en ce que** l'épaisseur de la coupe optique transversale ou la résolution optique est amenée à varier en formant des structures ayant des fréquences de modulation différentes et en particulier, lors d'un éclairage à une pluralité de longueurs d'ondes, l'épaisseur de coupe transversale est réglée à une valeur égale par adaptation de la fréquence de modulation respective.

17. Dispositif pour la détection optique résolue en profondeur d'un échantillon (29), comprenant :

   - des moyens (17) destinés à un éclairage de forme linéaire de l'échantillon à au moins une longueur d'onde,
   - des moyens (13) de structuration périodique de la lumière d'éclairage le long de l'extension linéaire,
   - des moyens destinés à former l'image de la lumière affectée par l'échantillon sur au moins un détecteur bidimensionnel ou un appareil photo (15) pour une détection non déscannée ligne par ligne de la lumière d'échantillon,
   - et des moyens (9, 23) destinés à générer un mouvement relatif entre l'échantillon et la lumière d'éclairage afin de générer des images différentes les unes des autres ayant des positions de phase différentes de la structure périodique par décalage de la structure d'éclairage,
   - dans lequel chaque image de phase générée de la position de phase correspond à un motif de lignes résultant de l'éclairage périodique structuré sur le détecteur bidimensionnel ou l'appareil photo,
   - des moyens destinés à calculer au moins une image de résolution plus élevée à partir des images de phase générées,
   - notamment pour mettre en oeuvre le procédé selon l'une quelconque des revendications précédentes,
   - **caractérisé en ce qu'**il est prévu

des moyens destinés à générer M images de phase pour chaque position de phase, avec M ≥ 5 et à générer une occultation de la lumière pendant le processus d'exploration afin de générer des espaces intermédiaires constitués de M ≥ 5 lignes non éclairées entre les lignes qui sont éclairées par de la lumière de détection provenant de la zone d'échantillon éclairée,

ou un espace supérieur à 2,5 lignes limitées par la diffraction est présent entre deux lignes d'éclairage sur le détecteur bidimensionnel ou l'appareil photo (15),

dans lequel les zones d'image adjacentes aux lignes sélectionnées sont masquées et ne sont pas exploitées, et les moyens (9, 23) destinés à générer le mouvement relatif entre l'échantillon et la lumière d'éclairage sont conçus de manière à ce que toutes les coupes transversales de l'échantillon (29) soient explorées dans le champ d'image par un balayage selon une pluralité de pas de balayage répétés en décalant le motif de lignes éclairé.

18. Dispositif selon la revendication 17, dans lequel il est prévu des moyens de commande d'intensité sur le chemin du faisceau d'éclairage et il est notamment prévu un modulateur électro-optique ou acousto-optique (5) destiné à occulter la lumière.

19. Dispositif de détection résolue en profondeur d'un échantillon selon l'une quelconque des revendications 17 ou 18, dans lequel il est prévu un dispositif de balayage (23) sur le chemin du faisceau de détection afin d'étaler ligne par ligne de manière discrète ou continue sur le détecteur la lumière d'échantillon pendant le processus d'exploration.

20. Dispositif selon la revendication 17, 18 ou 19, dans lequel il est prévu au moins un dispositif de balayage (9) en tant que moyens destinés à générer le mouvement relatif.

21. Dispositif selon la revendication 19 ou 20, dans lequel la position d'au moins un dispositif de balayage est réglable pour régler différentes phases d'image de la structuration.

22. Dispositif selon l'une quelconque des revendications 19 à 21, dans lequel il est prévu, en tant que moyens destinés à structurer l'éclairage, un élément optique structuré du point de vue de sa transparence, pouvant de préférence être mis en rotation autour de l'axe optique (1).

23. Dispositif selon l'une quelconque des revendications 19 à 22, dans lequel, pour régler différentes structures de fréquence sur le chemin de faisceau, il est prévu des réseaux insérables ayant des périodicités différentes.

Abb.1

Abb.2

Bildfeld

strukturierte Linie

t1

t2

Scan

t3

Zeiten

y

x

Bild 1

Bild 2

x

y

AOM an

AOM aus

Abb.3

Pupillenrand

$f = s/a$

$b = l/a$

Polarisationsrichtung des Lichtes für alle Ordnungen

-1. Ordnung    0. Ordnung    +1. Ordnung

Abb.4

Phasenlage

durch den Detektor bestimmtes Bildfeld

Scan

strukturierte Linie

Phasenlage

Scan

(a)

(b)

Abb.5

Abb.6

Abb.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10155002 A1
- US 6028306 A
- US 6947127 B2

**In der Beschreibung aufgeführte Nicht-Patentliteratur**

- **NEIL M.A.A. ; JUSKAITIS R. ; WILSON T.** Method of obtaining optical sectioning by using structured light in a conventional microscope. *Opt.Lett.,* 1997, vol. 22 (24), 1905-1907
- **LUKOSZ W. ; MARCHAND M.** Optische Auflösung unter Überschreitung der beugungsbedingten Auflösungsgrenze. *Optica Acta,* 1963, vol. 16, 241-255
- **HEINTZMANN R. ; CREMER C.** Laterally modulated excitation microscopy: improvement of resolution by using a diffraction grating. *Proc. of SPIE,* 1998, vol. 3568, 185-196
- **NEIL M.A.A. ; JUSKAITIS, A. ; WILSON, T.** Real time 3D fluorescence microscopy by two beam interference illumination. *Opt. Comm.,* 1998, vol. 153, 1-4
- **HEINTZMANN R. ; JOVIN T.M. ; CREMER C.** Saturated patterned excitation microscopy - a concept for optical resolution improvement. *JOSA A,* 2002, vol. 19 (8), 1599-1609
- **GUSTAFSSON, M.G.L. ; AGARD, D.A. ; SEDAT, J.W.** Doubling the lateral resolution of widefield fluorescence microscopy by structured illumination. *Proc. of SPIE,* 2000, vol. 3919, 141-150
- **GUSTAFSSON M.G.L.** Nonlinear structured-illumination microscopy: wide-field fluorescence imaging with theoretically unlimited resolution. *PNAS,* 2005, vol. 102, 13081-13086